# EUROPÄISCHE PATENTSCHRIFT

(11) **EP 2 504 718 B1**
(45) Veröffentlichungstag und Bekanntmachung des Hinweises auf die Patenterteilung: **27.09.2017**
(21) Anmeldenummer: 10777016.6
(22) Anmeldetag: 16.11.2010
(51) Int. Cl.: G01S 7/539, G01S 7/41

(54) **VERFAHREN ZUR ERFASSUNG VON OBJEKTEN**
METHOD FOR DETECTING OBJECTS
PROCÉDÉ DE DÉTECTION D'OBJETS

(30) Priorität: 23.11.2009 DE 102009047012
(43) Veröffentlichungstag der Anmeldung: 03.10.2012
(73) Patentinhaber: Robert Bosch GmbH, 70442 Stuttgart (DE)
(72) Erfinder: BARTHEL, Paul, 39104 Magdeburg (DE); HAGENMEYER, Lorenz, 73760 Ostfildern (DE); MUELLER, Martin, 70376 Stuttgart - Bad Cannstatt (DE); MIELENZ, Holger, 73760 Ostfildern (DE)
(86) Internationale Anmeldenummer: PCT/EP2010/067547
(87) Internationale Veröffentlichungsnummer: WO 2011/061173

(56) Entgegenhaltungen:
- DE-A1- 19 814 776
- DE-A1-102007 024 641
- US-A- 4 603 331
- US-A1- 2007 201 309
- US-A1- 2008 205 194
- US-A1- 2009 122 642
- US-B1- 6 449 215

## Beschreibung

Die Erfindung betrifft ein Verfahren zur Erfassung von Objekten, wobei mindestens ein Sender einen Sendeimpuls als Welle, insbesondere als akustische oder elektromagnetische Welle, emittiert, die von Objekten im Ausbreitungsraum zumindest teilweise reflektiert wird, wobei die reflektierte Welle von mindestens einem Empfänger als Empfangssignal detektiert wird, gemäß dem Oberbegriff von Anspruch 1. Weiterhin betrifft die Erfindung eine Vorrichtung zur Erfassung von Objekten, wobei mindestens durch ein Sender ein Sendeimpuls als Welle, insbesondere als akustische oder elektromagnetische Welle, emittierbar ist, die von Objekten im Ausbreitungsraum zumindest teilweise reflektiert wird, wobei die reflektierte Welle durch mindestens einen Empfänger als Empfangssignal detektierbar ist, gemäß dem Oberbegriff von Anspruch 11.

### Stand der Technik

Aus der Druckschrift DE 10 2007 024 641 A1 ist bekannt, dass Sensorinformationen aus mehreren unterschiedlichen für einen Messraum erfassten Sensorsignalströmen zur Bildung von Objekthypothesen herangezogen werden. Dabei können beliebige Objekte, insbesondere bewegliche Objekte, wie z. B.

Tiere und Personen erkannt werden. Allerdings müssen diese Signalströme ganzheitlich ausgewertet und gewichtet werden, was einen hohen technischen Aufwand bedingt. Des Weiteren zeigen die Offenlegungsschriften US 2009/122642 A1, DE 19814776 A1 und die US 4603331 A jeweils Verfahren zur Erfassung und Klassifikation von Objekten.

### Offenbarung der Erfindung

Es ist Aufgabe der vorliegenden Erfindung, ein Verfahren und eine Vorrichtung zur Bildung von Objekthypothesen anhand von einem Empfangssignal durch mindestens einem Empfänger bereitzustellen, wobei das Verfahren und die Vorrichtung messtechnisch einfach und zuverlässig aufgebaut sind, was eine schnelle und genaue Analyse zur Bildung von Objekthypothesen ermöglicht.

Zur Lösung dieser Aufgabe wird ein Verfahren mit den Merkmalen des Anspruches 1 sowie eine Vorrichtung mit den Merkmalen des Anspruchs 11 vorgeschlagen, insbesondere mit den Merkmalen des jeweiligen kennzeichnenden Teils. In den abhängigen Ansprüchen sind bevorzugte Weiterbildungen ausgeführt. Dabei können die in den Ansprüchen und in der Beschreibung erwähnten Merkmale jeweils für sich oder in Kombination erfindungswesentlich sein. Merkmale und Details, die im Zusammenhang mit dem erfindungsgemäßen Verfahren beschrieben sind, gelten dabei selbstverständlich auch im Zusammenhang mit der erfindungsgemäßen Vorrichtung und umgekehrt. Dabei können die in den Ansprüchen und in der Beschreibung erwähnten Merkmale jeweils einzeln oder in Kombination erfindungswesentlich sein.

Erfindungsgemäß ist vorgesehen, dass das Empfangssignal der reflektierten Welle in Segmente aufgeteilt wird, wobei aus den einzelnen Segmenten weitere Informationen gewonnen werden, die zur Bestimmung einer Objekthypothese herangezogen werden. Dadurch wird eine einfache und schnelle Verarbeitung der einzelnen Segmente ermöglicht und es kann zudem eine parallele Verarbeitung der einzelnen Segmente in Betracht gezogen werden.

Erfindungsgemäß ist, dass die einzelnen Segmente zeitlich unterteilt sind. Eine zeitliche Unterteilung des Empfangssignals ist dabei in zeitlich gleich lange und/oder ungleich lange Segmente denkbar. Dadurch kann das Empfangssignal der reflektierten Welle in fest definierte Teilsignale extrahiert werden, so dass eine Untersuchung der Teilsignale erleichtert wird. Zudem ist eine Beobachtung von signifikanten Merkmalen des Empfangssignals möglich. Weiterhin eröffnet sich die Möglichkeit, Teilsignale, die keinen hohen Informationsgehalt haben, wegfallen zu lassen, ohne eine wesentliche Reduzierung der Gesamtinformationen des Empfangssignals zu erhalten. Dadurch kann eine effiziente und schnelle Bearbeitung und Untersuchung des in Teilsignalen zerlegten Empfangssignals gewährleistet werden. Zudem ist es vorstellbar, dass der Signalverlauf des Empfangssignals in einzelne Segmente unterteilt wird. So können Informationen über einen bestimmten Zeitraum innerhalb eines definierten Grenzbereiches ermittelt werden, welche weitere Aussagen über den Informationsgehalt des Empfangssignals zulassen. Zudem kann der definierte Grenzbereich auch zeitlich begrenzt werden, so dass im Nahbereich einer Amplitude die Auslenkung des Empfangssignals genauer untersucht werden kann. Zudem kann das Empfangssignal in beliebig große zweidimensionale Flächen aufgeteilt werden, indem die Abszisse und Ordinate in beliebige Grenzbereiche aufgeteilt wird, so dass das Empfangssignal in beliebig große Teilstücke zerlegt werden kann, die zur näheren Untersuchung zum Informationsgehalt herangezogen werden können. Um besonders verwertbare Empfangssignale von Objekten zu empfangen, die weiter als 10 m von dem Empfänger entfernt sind, können vorteilhaft elektromagnetische Sender für die Emission der Sendeimpulse zum Einsatz kommen. Bei Entfernungen von Objekten unterhalb von 10 m haben sich Ultraschallwellen als besonders zweckmäßig erwiesen.

Weiterhin ist es vorteilhaft, dass eine Kurvenanpassung für die Einhüllende der Amplitude über die einzelnen zeitlichen Segmente erfolgt. Dadurch können die einzelnen Segmente charakterisiert werden, da über die Einhüllende der Amplitude wesentliche Merkmale des Signals erfasst werden. Zur Bestimmung der Einhüllenden kann eine Gaussfit-Funktion herangezogen werden. Dieses bietet insbesondere den Vorteil, dass die Benutzung der Gaussfit-Funktion durch eine modellbasierte Design-Software, wie z. B. Matlab zur schnellen und sicheren Berechnung der Einhüllenden genutzt werden kann, da diese Funktion bereits in einer der Bibliotheken der Anwendungssoftware zur Verfügung gestellt wird.

Weiterhin hat es sich als vorteilhaft erwiesen, dass Informationen zum Abklingverhalten des Empfangssignals ermittelt werden. Diese Informationen spiegeln indirekt die Wechselwirkung der Schallwelle mit dem zu erfassenden Objekt wider und können ebenfalls zur Charakterisierung des Objektes eingesetzt werden. Zudem ermöglicht das Abklingverhalten eine ganzheitliche Untersuchung des Empfangssignals, sodass eindeutige Merkmale herausgefiltert werden können. So kann das Abklingverhalten verschiedenster Objekte, wie z. B. glatte und raue Wände, Leitplanken, Fahrbahnpfosten, Bordsteine, Parkplatzbegrenzungen und dergleichen, aufgenommen werden. Die Abklingverhalten dieser Objekte können sodann in einer Datenbank gespeichert werden, die zur weiteren Klassifikation der Objekte herangezogen werden können.

Besonders vorteilhaft ist, dass Impulsmerkmale über die Halbhöhenbreite und/oder der eigentlichen Impulshöhe aus den einzelnen zeitlichen Segmenten des Empfangssignals ermittelt werden. Bei Objekten, die in ihrer Beschaffenheit Kanten, Ecken, Rundungen und Rauigkeiten im Allgemeinen aufweisen, erhöhen sich die Streuungs-/Beugungsanteile, was sich in der Regel in einer Vergrößerung der Halbhöhenbreite bemerkbar macht. So führt z. B. eine glatte Oberfläche zu geringen Streuinformationen und ein Empfangssignal kann nur wahrgenommen werden, wenn die Flächennormale des Objektes orthogonal zum Sensor steht. Zudem haben Objektgrößen Einflüsse auf die Intensität des detektierten Signals. Ferner wird z.B. die Information über die eigentliche Impulshöhe als zusätzliches Merkmal zur phänomenologischen Klassifikation von Objekten eingesetzt. So werden für alle detektierten Informationsmerkmale eines Empfangssignals die betrachteten extrahierten Merkmale für jedes zeitliche Segment betrachtet und es kann dementsprechend eine Klassifikation durchgeführt werden.

Ebenfalls erfindungsgemäß ist es, dass die Informationen der einzelnen zeitlichen Segmente und des Empfangssignals zur Bildung einer Objekthypothese herangezogen werden, die insbesondere Auskunft über die Art und/oder die Oberflächeneigenschaften und/oder den Typ des Objektes geben. Da der Informationsgehalt der zeitlichen Segmente durch Untersuchungen der Kurvenanpassung für die Einhüllende der Amplitude und/oder über die Halbhöhenbreite und/oder der eigentlichen Impulshöhe ermittelt wird, kann die Form eines zeitlichen Segmentes Auskunft über die Geometrie und Oberflächenbeschaffenheit eines Objektes geben. Zusätzlich, mit der zeitlichen Information über das Abklingverhalten des Empfangssignals, wird damit eine Möglichkeit geschaffen, das Objekt genauer zu identifizieren. Somit spiegeln diese Informationen indirekt die Wechselwirkung einer Schallwelle mit den Objekten wider und können zur sicheren Charakterisierung der Objekte eingesetzt werden.

Weiterhin ist es denkbar, dass durch einen iterativen und modellbasierten Ansatz und/oder über die Informationen gespeicherter Reflexionssignale aus einer Datenbank einem parametrischen oder nichtparametrischen Klassifikationsverfahren, wie z.B. neuronale Netze, Support Vektor Maschinen, Gaussprozesse oder weiterer Methoden des Machine Learning und Soft Computing, eine Bildung einer Objekthypothese ermöglicht wird. Es ist auch denkbar, dass Trainingssignale von Objekten aufgenommen werden, mit deren Hilfe ein adaptives System zur Klassifikation ausgelegt wird. Dabei können Trainingssignale von typischen Objekten, wie z. B. glatte und raue Wände, Leitplanken, Fahrbahnpfosten, Bordsteine, Parkplatzbegrenzungen oder dergleichen, sein. Für diese Objekte können auf Basis der Impulsmerkmale Klassifikatoren trainiert werden, die auf einem Steuergerät hinterlegt sind, das in einem Kraftfahrzeug seinen Einsatz findet. Zudem können diese Klassifikatoren für eine Auswertung in der Signalanalyse herangezogen werden. Weiterhin können die Trainingssignale zusammen mit den zeitlichen Segmenten einem künstlichen neuronalen Netz zugeführt werden, so dass die Bildung einer Objekthypothese erleichtert wird. Dadurch kann eine geringe Anzahl von aufgenommenen Trainingssignalen, die als Eingabe für ein parametrisches oder nichtparametrisches Klassifikationsverfahren dienen, bereits zur sicheren Bildung einer Objekthypothese führen. Auch kann hierdurch ein adaptives System in Form eines neuronalen Netzes und/oder einer Datenbank erstellt werden.

Weiterhin hat es sich als vorteilhaft erwiesen, dass durch eine ergänzende Sensorik, wie z. B. Video- und/oder Laserscanner Zusatzsignale und/oder Informationen digitaler Karten, zur Erstellung eines dreidimensionalen Umfeldmodells herangezogen werden. Die erhaltenen Informationen zur Objekthypothese verbunden mit den Zusatzsignalen einer ergänzenden Sensorik und/oder mit Informationen digitaler Karten, ermöglichen es, ein initiales dreidimensionales Umfeldmodell zu erstellen. Zudem ist es vorstellbar, dass GPS oder Navigationsdaten mit zur Erstellung des initialen dreidimensionalen Umfeldmodells herangezogen werden.

Des Weiteren kann vorgesehen sein, dass eine Bestimmung, insbesondere auch eine Berechnung, der Abweichung der Objekthypothese von dem dreidimensionalen Umfeldmodell vorgenommen wird. Dieses initiale dreidimensionale Umfeldmodell kann der Startpunkt für eine iterative Adaption einer Umfeldkonfiguration sein, mit dem Ziel, eine stabile Modellhypothese abzuleiten. Dafür kann für die ermittelte dreidimensionalen Umfeldmodell vorgenommen wird. Dieses initiale dreidimensionale Umfeldmodell kann der Startpunkt für eine iterative Adaption einer Umfeldkonfiguration sein, mit dem Ziel, eine stabile Modellhypothese abzuleiten. Dafür kann für die ermittelte dreidimensionale Umfeldkonfiguration die Schallausbreitung eines Sendesignals mittels eines Ray-Tracing-Verfahrens online berechnet und die physikalische Wechselwirkung (Beugung, Brechung, Streuung, Reflexion) dargestellt werden. Die benötigten physikalischen Objektparameter können aus einer Bibliothek von Standardmodellen entnommen werden. Weitere Schritte können durch einen Vergleich des berechneten Signals mit dem ermittelten Empfangssignal durchgeführt werden, um somit eine Abweichung von der Realität zu erhalten. Solange eine definierte Toleranzschwelle überschritten wird, wird davon ausgegangen, dass das dreidimensionale Umfeldmodell die Realität noch nicht ausreichend genau abbildet. Daher können gerichtete Adaptionen des dreidimensionalen Umfeldmodells durchgeführt werden und die zuvor beschriebenen Schritte solange durchlaufen werden, bis eine vorgegebene Abbruchbedingung erfüllt wird. Das daraus erhaltene dreidimensionale Umfeldmodell ist somit eine robuste Abbildung der realen Umwelt und kann somit z.B. einer nachgelagerten Fahrerassistenzfunktion in einem Kraftfahrzeug übergeben werden. Besonders vorteilhaft ist weiterhin, dass durch das Verfahren eine Detektion dynamischer Objekte ermöglicht wird. So können aus vorhandenen Fahrzeug- bzw. Sensorpositionen und Informationen zu statischen dreidimensionalen Objekten aus digitalen Karten die zu erwartenden Empfangssignale vorausberechnet werden. Starke Abweichungen sind vordergründig auf dynamische Objekte zurückzuführen, deren Klassifikation durch die geschilderte Eingrenzung des Hypothesenraumes schneller durchzuführen ist, insbesondere für Ultraschall überhaupt erst möglich wird. Eine Wiederholung der Messung kann dabei ebenfalls eine Erfassung von bewegten Objekten im Umfeld ermöglichen.

Es ist erfindungsgemäß, dass der Sender ein oder mehrere Ultraschallsensoren umfasst, die insbesondere akustische Wellen emittieren, wobei die Wellen von einem oder mehreren Empfängern als Empfangssignale detektiert werden. Dadurch kann die Genauigkeit der Objekthypothesenbildung erhöht werden. Ebenfalls kann der Sender ein oder mehrere Antennen umfassen, die elektromagnetische Wellen emittieren. Der Einsatz von Ultraschallsensoren ist dabei bis zu einer Entfernung von 10 m vorteilhaft. Über 10 m können elektromagnetischen Wellen vorteilhaft sein, wobei Ultraschallsensoren und Antennen kombiniert zum Einsatz
kommen können. Zudem ist es vorstellbar, dass mehrere Sendefrequenzen sequentiell durchfahren werden, was auch nur mit einem Sender möglich ist. Da es eine Frequenzabhängigkeit der Wechselwirkung einer Ultraschallwelle mit den Umfeldobjekten gibt, kann dementsprechend ebenfalls die Genauigkeit zur Objekthypothesenbildung durch weitere Sendefrequenzen erreicht werden. Ebenso können bei mehreren Ultraschallsensoren diese zeitlich versetzt ihre Sendeimpulse emittieren, sodass sich die Reflexionen überlagern, wobei die Überlagerung der Reflexionen zu zusätzlichen Informationen der Objekte im Umfeld führen. Auch der gemischte Einsatz von zeitlich versetzten emittierten Sendeimpulsen in verschiedenen Frequenzbereichen ist somit denkbar. Zudem kann durch eine räumliche Trennung der einzelnen Empfänger von den Sendern das Laufzeitverhalten der reflektierten Wellen genauer untersucht werden.

Die erfindungsgemäße Aufgabe wird ebenfalls gelöst durch eine Vorrichtung zur Erfassung von Objekten gemäß dem Patentanspruch 9, wobei mindestens durch ein Sender ein Sendeimpuls als Welle, insbesondere als akustische oder elektromagnetische Welle, emittierbar ist, die von Objekten im Ausbreitungsraum zumindest teilweise reflektiert wird, wobei die reflektierte Welle durch mindestens einen Empfänger als Empfangssignal detektierbar ist. Dazu ist erfindungsgemäß vorgesehen, dass das Empfangssignal der reflektierten Welle in zeitliche Segmente aufteilbar ist, wobei aus den einzelnen Segmenten Informationen erzielbar sind, die zur Bestimmung einer Objekthypothese herangezogen werden. Dabei ist die Vorrichtung nach einem Verfahren gemäß einem der Ansprüche 1 bis 8 betreibbar.

Besonders vorteilhaft ist, dass die Vorrichtung ein Sender-Array aufweist, wobei in zeitgleichen oder in zeitlich versetzten Abständen Sendeimpulse emittierbar sind. Damit ist auch der Einsatz der Vorrichtung z.B. in einem Kraftfahrzeug möglich, wobei durch den Einsatz von mehreren Sendern an der Kraftfahrzeugaußenhaut eine genaue Emission von Impulsen in das zu beobachtende Umfeld ermöglicht wird. Ebenso ist es vorstellbar, dass ein Empfänger-Array zum Einsatz kommt, das die reflektierten Impulse empfangen kann. Zudem kann bei Ultraschall der Einsatz eines Arrayelements als Sender und Empfänger möglich sein.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1:: eine schematische Ansicht eines Senders, der einen Sendeimpuls emittiert,
- Figur 2:: eine schematische Ansicht eines Senders, der einen von einem Objekt reflektierten Sendeimpuls empfängt,
- Figur 3:: ein Diagramm, in dem ein Empfangssignal einer reflektierten Welle dargestellt wird,
- Figur 4:: ein Diagramm, in dem ein einzelnes zeitliches Segment dargestellt wird und
- Figur 5:: ein Flussdiagramm zur Verdeutlichung des erfindungsgemäßen Verfahrens.

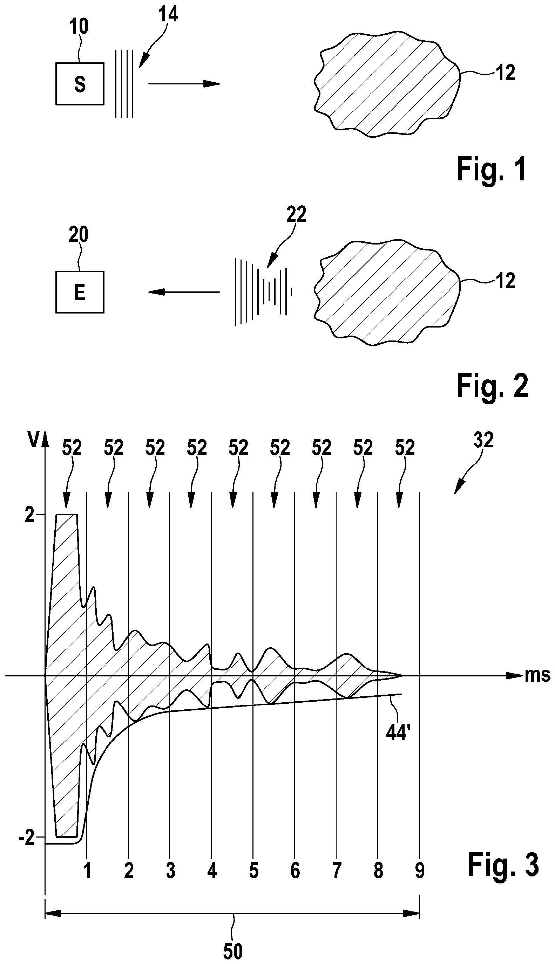

In Figur 1 ist schematisch ein Sender 10 z.B. für Ultraschallwellen bzw. elektromagnetische Wellen dargestellt, der einen Sendeimpuls 14 in einen Ausbreitungsraum emittiert, in dem sich ein Objekt 12 befindet. Der Sendeimpuls 14 kann in seiner Intensität variieren, sodass verschiedene Amplituden zum Einsatz kommen können. Zudem ist es möglich, verschiedene Sendeimpulslängen zu emittieren. Ferner ist der Einsatz von mehreren Sendern 10 denkbar, die zeitgleich oder zeitlich versetzt Sendeimpulse emittieren. Auch ist eine Variation der Frequenzen, mit denen die Sendeimpulse emittiert werden, möglich. Dabei ist die Aufstellung der Sendern 10 unabhängig von einer definierten geographischen Lage oder von den entsprechenden Empfängern.

In Figur 2 wird beispielhaft ein Empfänger 20 dargestellt, der zur Messung von Reflexionssignalen dient. Ein Objekt 12, auf das ein Sendeimpuls 14 trifft, verursacht eine reflektierte Welle 22, die in den Ausbreitungsraum zurückgestrahlt wird. Der Empfänger 20 ist dabei in der Lage, die reflektierte Welle in elektrische Signale in Form eines Empfangssignals umzuwandeln, sodass eine weitere elektrotechnische und/oder elektronische Verarbeitung möglich ist. Dabei kann ein Piezoelement in dem Empfänger 20 zum Einsatz kommen. Auch sind mehrere Empfänger 20 vorstellbar, die voneinander geographisch unabhängig eingesetzt werden können, sodass eine genauere Untersuchung der reflektierten Welle 22 ermöglicht wird. Dazu kann das Laufzeitverhalten der reflektierten Welle 22 näher untersucht werden. Dadurch wird es erleichtert, Bewegungsmuster von bewegten Objekten zwischen Empfänger 20 und Objekt 12 zu ermitteln.

In Figur 3 ist beispielsweise das Empfangssignal 32 einer reflektierten Welle 22 in einem Diagramm dargestellt. Dieses Empfangssignal 32 wird durch das erfindungsgemäße Verfahren segmentiert, wobei die einzelnen Segmente 52 untersucht werden. Dazu werden zu den einzelnen Segmenten 52, die in zeitlich gleichen Abständen segmentiert sind, die Informationen zur Halbhöhenbreite 42 als auch zur Impulshöhe 40 oder der Einhüllenden 44' ermittelt. Zusätzlich zu diesen Informationen der einzelnen Segmente 52 gibt das Nachschwingverhalten des Empfangssignals der reflektierten Welle 22 und/oder der Einhüllenden 44' des Empfangssignals 32 der reflektierten Welle 22, eine weitere Auskunft über die Objektbeschaffenheit.

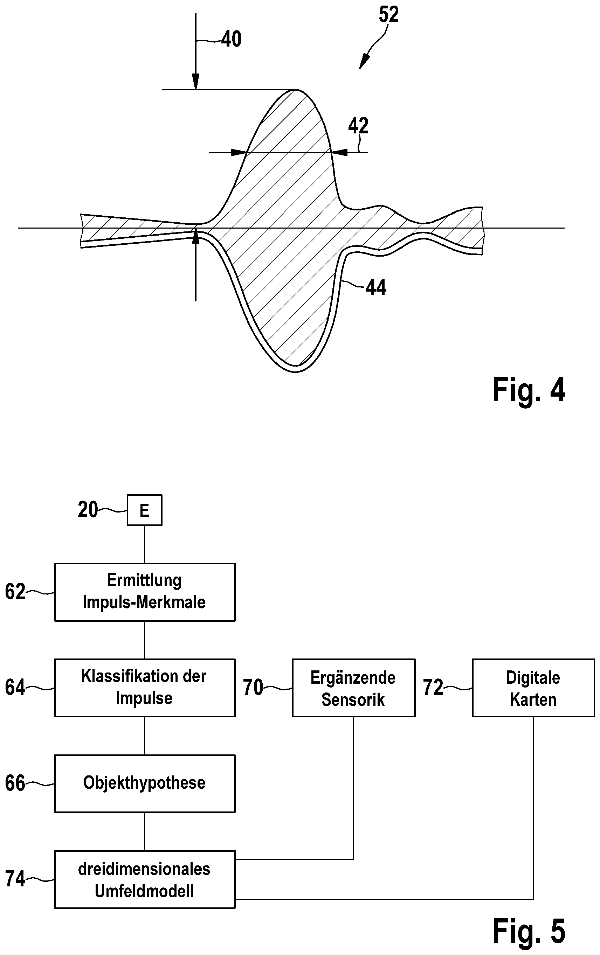

In Figur 4 ist die Form eines zeitlichen Segmentes 52 dargestellt. Dabei ist eine Charakterisierung des Segmentes 52 über eine Auswahl eindeutiger Merkmale möglich. Hierzu zählen eine Impulshöhe 40, eine Halbbreitenhöhe 42 und/oder eine Einhüllende 44. Dazu können die einzelnen Segmente 52 direkt Auskunft über die Geometrie und Oberflächenbeschaffenheit eines Objektes 12 oder in Relation zueinander geben. Zudem sind zeitliche Informationen zum Abklingverhalten ebenso zur Heranziehung der Bestimmung des Objektes 12 möglich. Diese Informationen spiegeln indirekt die Wechselwirkung des Sendeimpulses 14 mit den Objekten wider und können zur Charakterisierung von Objekten 12 eingesetzt werden. Eine glatte Oberfläche z. B. führt zu geringen Streuinformationen, sodass das Empfangssignal 32 nur wahrgenommen werden kann, wenn die Flächennormale des Objektes 12 orthogonal zum Empfänger 20 steht. Kanten, Ecken, Rundungen und Rauigkeiten im Allgemeinen erhöhen die Streuungs-/Beugungsanteile, was sich in einer Vergrößerung der Halbhöhenbreite 42 bemerkbar macht. Derartige Informationen der einzelnen Segmente 52 werden zur phänomenologischen Klassifikation von Objekten 12 eingesetzt.

In Figur 5 ist ein Ablaufdiagramm zur Erstellung eines initialen dreidimensionalen Umfeldmodells dargestellt. Aus einer von einem Empfänger 20 erfassten, reflektierten Welle 22 erfolgt zunächst eine Ermittlung von Impuls-Merkmalen 62 aus den einzelnen Segmenten 52, wie z. B. die Impulshöhe 40 und/oder die Halbhöhenbreite 42 und/oder die Einhüllende 44. Diese werden dann zur Klassifikation der Impulse 64 herangezogen. Die Klassifikation der Impulse 64 erfolgt durch Aufnahme von Trainingssignalen, mit deren Hilfe ein adaptives System in Form eines parametrischen oder nicht parametrischen Klassifikationsverfahrens wie z.B. ein neuronales Netz oder einer Datenbank zur Klassifikation ausgelegt wird. Dabei können zur Aufnahme von Trainingssignalen verschiedene Formen von Objekten 12 dienen, wie z. B. glatte und raue Wände, Leitplanken, Fahrbahnpfosten, Bordsteine, Parkplatzbegrenzungen und dergleichen. Für diese Objekte 12 werden auf Basis der Impulsmerkmale Klassifikatoren trainiert, die z.B. in einem Steuergerät eines Kraftfahrzeuges hinterlegt sein können und für die Auswertung in der Signalanalyse herangezogen werden. So erhält man Objekthypothesen 66, die zur Bildung eines dreidimensionalen Umfeldmodells herangezogen werden. Um ein genaueres dreidimensionales Umfeldmodell zu erhalten, kann zusätzlich zu den Objekthypothesen eine ergänzende Sensorik 70 genutzt werden, sodass durch Zusatzsignale, wie z. B. von Videosignalen und/oder Informationen eines eingesetzten Laserscanners, die Bildung eines genaueren dreidimensionalen Umfeldmodells 74 ermöglicht wird. Zudem können Informationen von digitalen Karten 72 zur Bildung eines dreidimensionalen Umfeldmodells 74 herangezogen werden. Um ein noch genaueres dreidimensionales Umfeldmodell 74 zu erhalten, wird ein Vergleich des berechneten von dem ermittelten Empfangssignal durchgeführt und eine Abweichung des simulierten Signals von der Realität berechnet. Solange eine definierte Toleranzschwelle überschritten ist, wird davon ausgegangen, dass das dreidimensionale Umfeldmodell 74 die Realität noch nicht ausreichend genau abbildet. Dementsprechend werden gerichtete Adaptionen des dreidimensionalen Umfeld modells 74 durchgeführt und die bisher beschriebenen Schritte so lange durchlaufen, bis eine Abbruchbedingung erfüllt wird. Damit kann das erhaltene dreidimensionale Umfeldmodell 74 einer nachgelagerten Fahrerassistenzfunktion übergeben werden. Eine Detektion dynamischer Objekte 12 kann dementsprechend effektiv erfolgen. So können mit Vorrang einer Fahrzeug- bzw. Sensorpositionierung 20 und der Information zu statischen dreidimensionalen Objekten 12 aus digitalen Karten 72 die zu erwartenden Empfangssignale vorausberechnet werden. Starke Abweichungen sind vordergründig auf dynamische Objekte 12 zurückzuführen, deren Klassifikation durch die geschilderte Eingrenzung des Hypothesenraumes schneller durchzuführen ist, insbesondere für Ultraschall ermöglicht wird. Es ist ein Einsatz des erfindungsgemäßen Verfahrens und der erfindungsgemäßen Vorrichtung in Kraftfahrzeugen möglich.

## Patentansprüche

1. Verfahren zur Erfassung von Objekten (12), wobei mindestens ein Ultraschallsensor (10) in einem Kraftfahrzeug einen Sendeimpuls (14) als Welle, insbesondere als akustische Welle, emittiert, die von Objekten (12) im Ausbreitungsraum zumindest teilweise reflektiert wird, wobei die reflektierte Welle (22) von mindestens einem Empfänger (20) als Empfangssignal (32) detektiert wird,
**dadurch gekennzeichnet, dass**
das Empfangssignal (32) der reflektierten Welle (22) in zeitliche Segmente (52) aufgeteilt wird, wobei aus den einzelnen Segmenten (52) Impuls-Merkmale (62) ermittelt und diese Impuls-Merkmale (62) zur Klassifikation der Impulse (64) herangezogen werden, wobei die Klassifikation der Impulse (64) zur Bestimmung einer Objekthypothese (66) herangezogen werden, die Auskunft über die Art und/oder die Oberflächeneigenschaften und/oder den Typ des Objektes geben.

2. Verfahren zur Erfassung von Objekten (12) nach Anspruch 1,
**dadurch gekennzeichnet, dass**
eine Kurvenanpassung für die Einhüllende (44) der Amplitude über die einzelnen zeitlichen Segmente (52) erfolgt.

3. Verfahren zur Erfassung von Objekten (12) nach Anspruch 1 bis 2,
**dadurch gekennzeichnet, dass**
Informationen zum Abklingverhalten (50) des Empfangssignals (32) ermittelt werden.

4. Verfahren zur Erfassung von Objekten (12) nach einem der vorhergehenden Ansprüche,
**dadurch gekennzeichnet, dass**
Impulsmerkmale (62) über die Halbhöhenbreite (42) und/oder der eigentlichen Impulshöhe (40) aus den einzelnen zeitlichen Segmenten (52) des Empfangssignals (32) ermittelt werden.

5. Verfahren zur Erfassung von Objekten (12) nach einem der vorhergehenden Ansprüche,
**dadurch gekennzeichnet, dass**
durch einen iterativen und modellbasierten Ansatz und/oder über die Informationen gespeicherter Reflexionssignale aus einer Datenbank und/oder einem parametrischen oder nichtparametrischen Klassifikationsverfahren, wie z.B. neuronale Netze, Support Vektor Maschinen, Gaussprozesse oder weiterer Methoden des Machine Learning und Soft Computing, eine Bildung einer Objekthypothese (66) ermöglicht wird.

6. Verfahren zur Erfassung von Objekten (12) nach einem der vorhergehenden Ansprüche ,
**dadurch gekennzeichnet, dass**
durch eine ergänzende Sensorik (70), wie z. B. Video- und/oder Laserscanner, Zusatzsignale und/oder Informationen digitaler Karten (72) zur Erstellung eines dreidimensionalen Umfeldmodells (74) herangezogen werden.

7. Verfahren zur Erfassung von Objekten (12) nach Anspruch 6,
**dadurch gekennzeichnet, dass**
eine Bestimmung, insbesondere auch eine Berechnung, der Abweichung der Objekthypothese von dem dreidimensionalen Umfeldmodell (74) vorgenommen wird.

8. Verfahren zur Erfassung von Objekten (12) nach einem der vorhergehenden Ansprüche,
**dadurch gekennzeichnet, dass**
der Sender (10) ein oder mehrere Ultraschallsensoren umfasst, die akustische Wellen emittieren bzw. der Sender ein oder mehrere Antennen umfasst, die elektromagnetische Wellen emittieren, wobei die Wellen von einem oder mehreren Empfängern als Empfangssignale detektiert werden.

9. Vorrichtung in einem Kraftfahrzeug zur Erfassung von Objekten (12), mit mindestens einem Ultraschallsender (10), zum Emittieren eines Sendeimpulses (14) als Welle, insbesondere als akustische Welle, die von Objekten (12) im Ausbreitungsraum zumindest teilweise reflektiert wird, und mit mindestens einem Empfänger (20) zum Detektieren der reflektierten Welle (22) als Empfangssignal (32),
**dadurch gekennzeichnet, dass**
die Vorrichtung dazu eingerichtet ist, das Empfangssignal (32) der reflektierten Welle (22) in zeitliche Segmente (52) aufzuteilen, aus den einzelnen Segmenten (52) Impuls-Merkmale (62) zu ermitteln und diese Impuls-Merkmale (62) zur Klassifikation der Impulse (64) heranzuziehen, wobei die Klassifikation der Impulse (64) zur Bestimmung einer Objekthypothese (66) herangezogen werden, die Auskunft über die Art und/oder die Oberflächeneigenschaften und/oder den Typ des Objektes geben.

10. Vorrichtung zur Erfassung von Objekten (12) nach Anspruch 9, **dadurch gekennzeichnet, dass** die Vorrichtung ein Sender-Array aufweist, wobei in zeitgleichen oder in zeitlich versetzten Abständen Sendeimpulse (14) emittierbar sind.

11. Vorrichtung nach einem der Ansprüche 9 oder 10, welche nach einem Verfahren gemäß einem der Ansprüche 1 bis 8 betreibbar ist.

## Claims

1. Method for detecting objects (12), at least one ultrasonic sensor (10) in a motor vehicle emitting a transmission pulse (14) as a wave, in particular as an acoustic wave, which is at least partially reflected by objects (12) in the propagation space, the reflected wave (22) being detected by at least one receiver (20) as a reception signal (32),
**characterized in that**
the reception signal (32) of the reflected wave (22) is divided into temporal segments (52), pulse features (62) being determined from the individual segments (52) and these pulse features (62) being used to classify the pulses (64), the classification of the pulses (64) being used to determine an object hypothesis (66) which provides information on the nature and/or surface properties and/or type of the object.

2. Method for detecting objects (12) according to Claim 1,
**characterized in that**
curve adaptation is carried out for the envelope (44) of the amplitude over the individual temporal segments (52).

3. Method for detecting objects (12) according to Claims 1 and 2,
**characterized in that**
information relating to the decay behaviour (50) of the reception signal (32) is determined.

4. Method for detecting objects (12) according to one of the preceding claims,
**characterized in that**
pulse features (62) over the full width at half maximum (42) and/or the actual pulse height (40) are determined from the individual temporal segments (52) of the reception signal (32).

5. Method for detecting objects (12) according to one of the preceding claims,
**characterized in that**
it is possible to form an object hypothesis (66) by means of an iterative and model-based approach and/or using the information from stored reflection signals from a database and/or a parametric or non-parametric classification method, for example neural networks, support vector machines, Gaussian processes or further machine learning and soft computing methods.

6. Method for detecting objects (12) according to one of the preceding claims,
**characterized in that**
an additional sensor system (70), for example a video and/or laser scanner, uses additional signals and/or information from digital maps (72) to create a three-dimensional environmental model (74).

7. Method for detecting objects (12) according to Claim 6,
**characterized in that**
the deviation of the object hypothesis from the three-dimensional environmental model (74) is determined, in particular is also calculated.

8. Method for detecting objects (12) according to one of the preceding claims,
**characterized in that**
the transmitter (10) comprises one or more ultrasonic sensors which emit acoustic waves or the transmitter comprises one or more antennas which emit electromagnetic waves, the waves being detected by one or more receivers as reception signals.

9. Apparatus in a motor vehicle for detecting objects (12), having at least one ultrasonic transmitter (10) for emitting a transmission pulse (14) as a wave, in particular as an acoustic wave, which is at least partially reflected by objects (12) in the propagation space, and having at least one receiver (20) for detecting the reflected wave (22) as a reception signal (32),
**characterized in that**
the apparatus is set up to divide the reception signal (32) of the reflected wave (22) into temporal segments (52), to determine pulse features (62) from the individual segments (52) and to use these pulse features (62) to classify the pulses (64), the classification of the pulses (64) being used to determine an object hypothesis (66) which provides information on the nature and/or surface properties and/or type of the object.

10. Apparatus for detecting objects (12) according to Claim 9, **characterized in that** the apparatus has a transmitter array, transmission pulses (14) being able to be emitted at simultaneous intervals or at temporally offset intervals.

11. Apparatus according to either of Claims 9 and 10, which can be operated in accordance with a method according to one of Claims 1 to 8.

## Revendications

1. Procédé de détection d'objets (12), au moins un capteur à ultrasons (10) dans un véhicule automobile émettant une impulsion d'émission (14) sous la forme d'une onde, notamment sous la forme d'une onde acoustique, laquelle est au moins partiellement réfléchie par des objets (12) dans l'espace de propagation, l'onde réfléchie (22) étant détectée par au moins un récepteur (20) en tant que signal reçu (32),
**caractérisé en ce que**
le signal reçu (32) de l'onde réfléchie (22) est divisé en segments temporels (52), des caractéristiques d'impulsion (62) étant déterminées à partir des segments (52) individuels et ces caractéristiques d'impulsion (62) étant utilisées pour la classification des impulsions (64), la classification des impulsions (64) étant utilisée pour définir une hypothèse d'objet (66) qui fournit un renseignement à propos de la nature et/ou des propriétés de surface et/ou du type de l'objet.

2. Procédé de détection d'objets (12) selon la revendication 1, **caractérisé en ce qu'**une adaptation de courbe est effectuée pour l'enveloppe (44) de l'amplitude sur les segments temporels (52).

3. Procédé de détection d'objets (12) selon la revendication 1 à 2, **caractérisé en ce que** des informations à propos du régime d'évanouissement (50) du signal reçu (32) sont déterminées.

4. Procédé de détection d'objets (12) selon l'une des revendications précédentes, **caractérisé en ce que** les caractéristiques d'impulsion (62) sont déterminées sur la largeur de la demie-hauteur (42) et/ou la hauteur d'impulsion (40) proprement dite à partir des segments temporels (52) du signal reçu (32).

5. Procédé de détection d'objets (12) selon l'une des revendications précédentes, **caractérisé en ce qu'**une représentation d'une hypothèse d'objet (66) est rendue possible par une approche itérative et basée sur un modèle et/ou par le biais des informations de signaux réfléchis enregistrés issus d'une base de données et/ou un procédé de classification paramétrique ou non paramétrique, comme par exemple des réseau neuronaux, des machines à vecteur de support, des processus de Gauss ou d'autres méthode de l'apprentissage automatique et de l'informatique floue.

6. Procédé de détection d'objets (12) selon l'une des revendications précédentes, **caractérisé en ce que** des signaux supplémentaires et/ou des informations de cartes numériques (72) sont utilisés par un système de détection complémentaire (70), par exemple un système de balayage vidéo et/ou à laser, pour créer un modèle d'environnement tridimensionnel (74).

7. Procédé de détection d'objets (12) selon la revendication 6, **caractérisé en ce qu'**une définition, notamment aussi un calcul de l'écart entre l'hypothèse d'objet et le modèle d'environnement tridimensionnel (74) est effectué.

8. Procédé de détection d'objets (12) selon l'une des revendications précédentes, **caractérisé en ce que** l'émetteur (10) comprend un ou plusieurs capteurs à ultrasons qui émettent des ondes acoustiques ou l'émetteur comprend une ou plusieurs antennes qui émettent des ondes électromagnétiques, les ondes étant détectées en tant que signaux reçus par un ou plusieurs récepteurs.

9. Dispositif dans un véhicule automobile pour la détection d'objets (12), comprenant au moins un émetteur d'ultrasons (10) servant à émettre une impulsion d'émission (14) sous la forme d'une onde, notamment sous la forme d'une onde acoustique, laquelle est au moins partiellement réfléchie par des objets (12) dans l'espace de propagation, et comprenant au moins un récepteur (20) servant à détecter l'onde réfléchie (22) n tant que signal reçu (32),
**caractérisé en ce que**
le dispositif est conçu pour diviser le signal reçu (32) de l'onde réfléchie (22) en segments temporels (52), pour déterminer des caractéristiques d'impulsion (62) à partir des segments (52) individuels et pour utiliser ces caractéristiques d'impulsion (62) pour la classification des impulsions (64), la classification des impulsions (64) étant utilisée pour définir une hypothèse d'objet (66) qui fournit un renseignement à propos de la nature et/ou des propriétés de surface et/ou du type de l'objet.

10. Dispositif de détection d'objets (12) selon la revendication 9, **caractérisé en ce que** le dispositif possède un réseau de capteurs, des impulsions d'émission (14) pouvant être émises à des intervalles synchrones ou décalés dans le temps.

11. Dispositif selon l'une des revendications 9 ou 10 qui peut fonctionner conformément à un procédé selon l'une des revendications 1 à 8.
